**Europäisches Patentamt**

**European Patent Office**

**Office européen des brevets**

(19)

(11) Veröffentlichungsnummer: **0 158 093**
**A2**

# (12) EUROPÄISCHE PATENTANMELDUNG

(21) Anmeldenummer: **85102237.6**

(22) Anmeldetag: **28.02.85**

(51) Int. Cl.⁴: **G 01 J 5/34**
**H 01 L 37/02**

(30) Priorität: **13.04.84 DE 3413921**

(43) Veröffentlichungstag der Anmeldung:
**16.10.85 Patentblatt 85/42**

(84) Benannte Vertragsstaaten:
**AT BE CH FR GB IT LI LU NL SE**

(71) Anmelder: **PREH, Elektrofeinmechanische Werke Jakob Preh Nachf. GmbH & Co.**
**Postfach 1740 Schweinfurter Strasse 5**
**D-8740 Bad Neustadt/Saale(DE)**

(72) Erfinder: **Berthold, Gottfried, Dr. rer. nat**
**Herzog-Ulrich-Strasse 16**
**D-7410 Reutlingen 28(DE)**

(72) Erfinder: **Müller, Walter**
**Hauptstrasse 35**
**D-8741 Salz(DE)**

(72) Erfinder: **Popella, Detlef, Dipl.-Phys.**
**Von Humboldt Strasse 21**
**D-8730 Bad Kissingen(DE)**

(72) Erfinder: **Siede, Heinz-Jürgen, Dipl.-Ing.**
**Altenbergstrasse 2**
**D-8740 Bad Neustadt/Saale(DE)**

(54) Verfahren zur Herstellung eines Infrarotdetektors.

(57) Die Erfindung beschreibt ein Verfahren zur Herstellung eines Infrarotdetektors, bei dem in einem Gehäuse ein Infrarotsensorelement, ein Feldeffekttransistor und ein hochohmiger Ableitwiderstand angeordnet sind. Bekannte Infrarotdetektoren verwenden separate und vergleichsweise teuere Chipwiderstände als Ableitwiderstände. Um den Infrarotdetektor kostengünstiger herstellen zu können, wird ein Verfahren vorgeschlagen, bei dem der Widerstand durch Aufstempeln auf ein Trägerelement, das aus einem hochtemperaturbeständigen Thermoplastkunststoff besteht, aufgebracht und anschließend ausgehärtet wird.

./...

Fig. 1

rren
Elektrofeinmechanische Werke
Jakob Preh, Nachf. GmbH & Co.
Schweinfurter Straße 5
8740 Bad Neustadt/Saale

0158093

-1-

, den 12.04.1984

Bsch/Hi
5/84 Pt.

## Verfahren zur Herstellung eines Infrarot- detektors

Die Erfindung geht von einem Verfahren zur Herstellung eines Infrarotdetektors nach dem Oberbegriff des Anspruches 1 aus.

Die Strahlungsmeßtechnik, insbesondere im Spektralbereich von 0,6 µm bis 40 µm hat in den letzten Jahren eine stürmische Entwicklung erlebt. Neuartige optische Materialien, neue fotoelektrische und thermische Infrarotstrahlungsempfänger und wesentliche Fortschritte auf dem Gebiet der elektronischen Bauelemente führten zu Gerätesystemen, mit denen zahlreiche Strahlungsmeßprobleme im militärischen, industriellen und medizinischen Bereich gelöst werden konnten. Für die Anwendung im militärischen Bereich wären die passiven Infrarotbildgeräte, Linescanner und IR-Systeme zur Zielortung und Zielverfolgung zu nennen. Industrielle Anwendungsgebiete sind die Analysentechnik, die Infrarotspektralspektroskopie, die Thermografie, die allgemeine Strahlungsmeßtechnik und die berührungslose Temperaturmeßtechnik. Beispielsweise kann die spektrale Strahldichte, das ist die ausgesuchte Strahlungsleistung bezogen auf Fläche und Raumwinkel, abhängig von der Wellenlänge und abhängig von anderen Parametern wie Emissionswinkel, Temperatur, Oberflächenbeschaffenheit, Umgebungstemperaturstrahlung usw. bestimmt werden. Wenn die Einflußgrößen Emissionsgrad und Umgebungstemperatur bekannt sind, kann man durch Messung der Strahldichte berührungslos die Temperatur einer Oberfläche bestimmen. Derartige Strahlungspyrometer werden bei- spielsweise eingesetzt bei der Überwachung, Kontrolle und Regelung von Fertigungsprozessen in der Kunststoffindustrie, bei der Temperaturmessung an elektronischen Bauelementen, bei der Ermittlung der Oberflächentemperatur von Getrieben, Gehäusen und Lagern von Motoren und Generatoren, bei der Messung der Temperatur an laufenden Gummireifen, bei der Temperaturmessung in der Medizin bei der Diagnose und zur Therapiekontrolle, bei

Heißläuferermittlungen an Eisenbahnwagen, bei der Lecksuche an Fernheizungen, bei der Prüfung der Wärmeisolation an Häuserfassaden und nicht zuletzt bei der Überwachung von Emissionsquellen, z.B. Abgasen, und zur Früherkennung von Wald- und Moorbränden.

Für derartige Strahlungs- und Temperaturmessungen werden berührungslos arbeitende Detektoren benötigt. Diese Detektoren wandeln infrarote Strahlung in elektrische, optische oder mechanische Signale um. Man unterscheidet Nicht-Quantendetektoren (thermische Detektoren) und Quantendetektoren. Die Nicht-Quantendetektoren ändern aufgrund der Absorption infraroter Strahlung ihren inneren und/oder äußeren Energiezustand im Kristallgitter. Sie sprechen nicht auf Energiequanten an, sondern auf Strahlungsleistung. Es werden verschiedene physikalische Effekte zur Herstellung der Detektoren ausgenutzt, so z.B. der Seebeck-Effekt, der Bolometer-Effekt, der thermopneumatische Effekt, der Ettinghausen-Nernst-Effekt, der thermooptische Effekt und nicht zuletzt der pyroelektrische Effekt.

Detektoren, die den pyroelektrischen Effekt ausnutzen, sind erst in den letzten Jahren auf den Markt gekommen und sie haben sich wegen der Robustheit des Aufbaus und des einfachen Betriebes bereits einen ansehnlichen Marktanteil erobert. Diese Empfänger nutzen die Temperaturabhängigkeit der spontanen Polarisation sogenannter ferroelektrischer Kristalle oder Keramiken aus, die infolge ihres unsymmetrischen Kristallaufbaus einen Dipolcharakter und damit eine permanente elektrische Polarisation aufweisen. Der pyroelektrische Detektor ist im Prinzip ein strahlungsempfindlicher Kondensator. Eine Änderung der Temperatur infolge Strahlungsabsorption erzeugt eine Änderung der Polarisation, die wiederum eine Änderung der Potentialdifferenz am Kondensator zur Folge hat. Diese Potentialänderung kann mit einer geeigneten Verstärkerschaltung als Spannungs- oder Stromänderung gemessen werden. Da das Photosignal und das Rauschsignal sich mit zunehmender Modulationsfrequenz fast gleichmäßig ändern, bleibt das Nachweisvermögen (proportional dem Signal/Rauschverhältnis) über einen großen Frequenzbereich hinweg konstant. Als Materialien für pyroelektrische Detektoren werden vorwiegend TGS (Triglyzinsulfat), aber neuerdings auch Sinterkeramiken aus BSN (Barium-Strontiumniobat), PZT (Blei-Zirkon-Titanat) oder PLZT (Lanthandotiertes Blei-Zirkon-Titanat) verwendet.

Ein Verfahren zur Herstellung eines pyroelektrischen Detektors ist bereits aus der DE-PS 26 09 292 bekannt. Auf ein Substrat wird ein Ferroelektrikum, wie z.B. Natriumnitrit, aus der schmelzflüssigen Phase oder aus einer Lösung in Form einer dünnen Schicht aufgebracht und auskristallisiert. Das Aufbringen erfolgt derart, daß das Substrat in die Natriumnitrit-Schmelze oder -Lösung eingetaucht, aus dieser wieder herausgezogen und abgekühlt bzw. getrocknet wird. Die Kristallisation bzw. die Abkühlung der Natriumnitritschicht erfolgt vorzugsweise in einem elektrischen Feld. Auf die Natriumnitritschicht wird schließlich eine strahlungsabsorbierende Schicht aufgebracht.

Aus welchem Material diese strahlungsabsorbierende Schicht besteht und wie sie aufgebracht wird, ist in der DE-OS 32 02 819 beschrieben. Die Aufbringung der Schicht erfolgt im Hochvakuum durch thermische Verdampfung reaktiv oder durch reaktive Zerstäubung in einer Sauerstoff-Edelgasatmosphäre. Die Schicht selbst besteht aus einer chemisch beständigen, elektrisch leitfähigen Verbindung von Metallen und deren Oxiden, wie z.B. Zinn und Zinnoxid oder auch Silizium und Siliziumoxid. Der nichtmetallische Anteil der Verbindung entspricht nicht den rein stöchiometrischen Gewichtsverhältnissen. Ein derartig hergestelltes Infrarotsensorelement wird zusammen mit einem Impedanzwandler in der Form eines Feldeffekttransistors und mit einem hochohmigen Ableitwiderstand in einem TO5-Gehäuse untergebracht. Aus dieser Veröffentlichung ist nicht zu entnehmen, wie man den Ableitwiderstand herstellen soll und aus welcher Widerstandsmasse er besteht.

Das pyroelektrische Infrarotsensorelement stellt praktisch einen Kondensator dar, der mit dem Gate des Feldeffekttransistors verbunden ist. Da der Feldeffekttransistor aber am Gate-Eingang hochohmig ist, würde eine durch Infrarotstrahlung aufgebaute Ladung am Sensorelement nur langsam über die Restströme sowohl des Feldeffekttransistors als auch des Sensorelementes abfließen. Dies bedeutet, daß die Zeit in der das Sensorelement nicht reagiert, sehr lang ist. Um diese Zeit zu verkürzen, hat man einen hochohmigen Ableitwiderstand vorgesehen, der für ein schnelles Abfließen der entstandenen Ladung sorgt. Mit Hilfe der Höhe des Ableitwiderstandes kann man, bei gegebenen Verhältnissen des Sensorelementes, die Zeitkonstante des ganzen Systems verändern. Man muß hierbei einen Kompromiß schließen zwischen einer vernünftigen Zeitkonstante und der Empfindlichkeit des Sensorelementes.

Bei den bekannten Infrarotdetektoren wird als hochohmiger Ableitwiderstand ein gesonderter Chip-Widerstand verwendet, der relativ teuer ist.

Aufgabe der vorliegenden Erfindung ist es, ein Verfahren zur Herstellung eines Infrarotdetektors zu finden, bei dem der hochohmige Ableitwiderstand wesentlich kostengünstiger herstellbar ist.

Diese Aufgabe wird erfindungsgemäß durch die im Kennzeichnungsteil des Anspruches 1 angegebenen Verfahrensschritte gelöst.

Weitere vorteilhafte Verfahrensschritte ergeben sich aus den Unteransprüchen.

Die Erfindung wird nachfolgend für zwei Ausführungsbeispiele anhand der Zeichnungen näher beschrieben.

Von den Figuren zeigt

Figur 1   eine teilweise aufgeschnittene perspektivische Darstellung eines Infrarotdetektors,

Figur 2   ein Schaltbild eines Infrarotdetektors,

Figur 3   ein im vergrößerten Maßstab und in perspektivischer Explosionsdarstellung gezeigtes Trägerelement mit Infrarotsensorelement,

Figur 4   ein im vergrößerten Maßstab und in perspektivischer Explosionsdarstellung gezeigtes Trägerelement mit einem anderen Infrarotsensorelement.

0158093

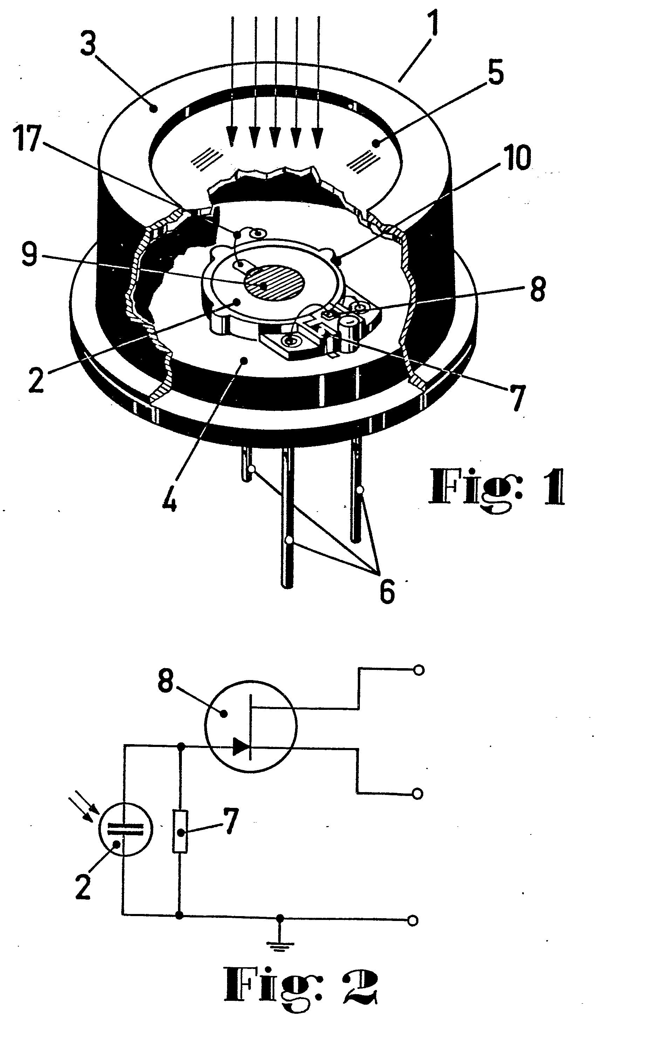

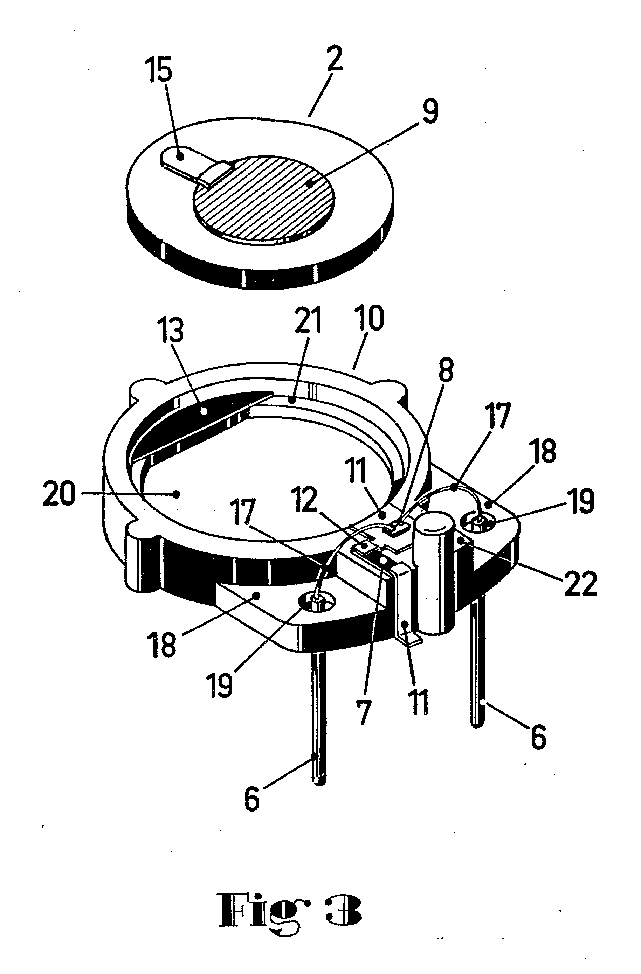

Wie aus Figur 1 zu entnehmen ist, besteht der Infrarotdetektor aus einem Gehäuse 1, in dem das eigentliche Infrarotsensorelement 2 bzw. 16 und eine entsprechend Figur 2 ausgeführte Schaltung untergebracht sind. Das Gehäuse 1 ist ein sogenanntes T05-Gehäuse mit einem Gehäusesockel 4 und einem Gehäusedeckel 3. Im Gehäusedeckel 3 ist frontseitig eine Öffnung ausgespart, die durch ein Fenster 5 hermetisch verschlossen ist. Bei dem Fenster handelt es sich um chemisch poliergeätzte Siliziumscheiben in einer Stärke von etwa 200 µm. Diese Scheiben werden aus größeren Platten mit einem YAG-Lasersystem kreisförmig mit dem erforderlichen Durchmesser ausgeschnitten. Diese Fenster haben bei einer Infrarot-Wellenlänge von 2 bis 24 µm eine Transmission von ca. 60%. Die Verwendung von Siliziumscheiben als Fenster verhindern Störungen bei den Strahlungs-Messungen durch das Umgebungslicht. Von Bedeutung ist noch, daß die Fenster hermetisch dicht in den Gehäusedeckel 3 eingeklebt sein müssen. Die Fenster müssen sowohl gas- als auch wasserdampfundurchlässig sein.

Der Grund hierfür liegt darin, daß der für die Strahlungsempfindlichkeit wesentliche Isolationswiderstand des Kondensatorsystems durch die Kristallschichtqualität und die Adsorption von Feuchtigkeit an der Systemoberfläche bestimmt wird. Die hydroskopischen Eigenschaften des verwendeten Natriumnitrits für das Infrarotsensorelement vermindern den Isolationswiderstand durch Adsorption der Feuchtigkeit und die damit hervorgerufene Oberflächenleitung stellt einen unkontrollierbaren Kurzschluß für das Sensorelement dar. Somit ist der wirksame Ableitwiderstand nicht mehr willkürlich wählbar.

Vor dem Schließen des Gehäusedeckels 3 werden die Infrarotsensorelemente bei 130°C zwei Stunden lang im Vakuum bei $10^{-1}$ Torr ausgeheizt und unter trockener $N_2$-Atmosphäre verkappt.

Die hier verwendeten Infrarotsensoren werden durch Abscheiden von dünnen Kristallschichten direkt aus der Schmelze auf eine leitende Unterlage gewonnen.

Nach dem Ziehen der Kristallschicht wird diese in einem elektrischen Feld polarisiert. Bei der Kristallzucht entsteht eine polydomäne Kristallschicht. Die Größe der einzelnen Domänen beträgt bis zu einigen Millimetern. Sie unterscheiden sich durch ihren Polarisationsgrad. Mehrere verschiedene Polarisationszustände auf einem Sensorelement vermindern seine Empfindlichkeit. Die Polarisation der einzelnen Elemente wird bei erhöhter Temperatur mit angelegter Wechselspannung durchgeführt. Die Sensorelemente werden danach bei angelegter Spannung soweit heruntergekühlt, daß eine nahezu einheitliche Polarisationsausrichtung der aktiven Kristallschicht eingefroren wird.

Durch die Kristallzucht aus der Natriumnitrit-Schmelze entsteht eine einkristalline Kristallschicht auf der leitenden Unterlage. Diese Unterlage bildet somit die eine Elektrode des Kondensatorsystems. Die zweite Elektrode wird auf die Natriumnitrit-Kristallschicht durch Kathodenzerstäubung aufgebracht. Da metallische Deckelektroden ein hohes optisches Reflexionsvermögen besitzen, sind sie als Strahlungsabsorber nicht geeignet. Die Deckelektrode soll neben einer ausreichenden elektrischen Leitfähigkeit auch ein hohes Absorptionsvermögen im Infrarot-Wellenbereich aufweisen. Diese Absorptionsschicht ist in den Figuren mit 9 bzw. 14 bezeichnet. Als Material verwendet man Zinn als Target. In einer $Ar/O_2$-Atmosphäre mit geringem $O_2$-Partialdruck wachsen so $SnO_x$-Schichten auf. Größe und Form dieser Schichten werden durch Metallblenden bestimmt. Man erreicht so eine metallische Leitfähigkeit bei gleichzeitiger hoher Infrarot-Absorption. Die Absorption im Bereich von 2 bis 24 µm beträgt im Durchschnitt 75%. Abschließend wird, ähnlich wie beim Aufbringen des Ableitwiderstandes, der Leiterbahnen und der Anschlußstücke, die Kontaktierungsfläche 15 aufgetragen.

Das Herstellen der eigentlichen Infrarotsensorelemente 2 bzw. 16 erfolgt schließlich durch einfaches mechanisches Ausstanzen aus der beschichteten leitenden Unterlage.

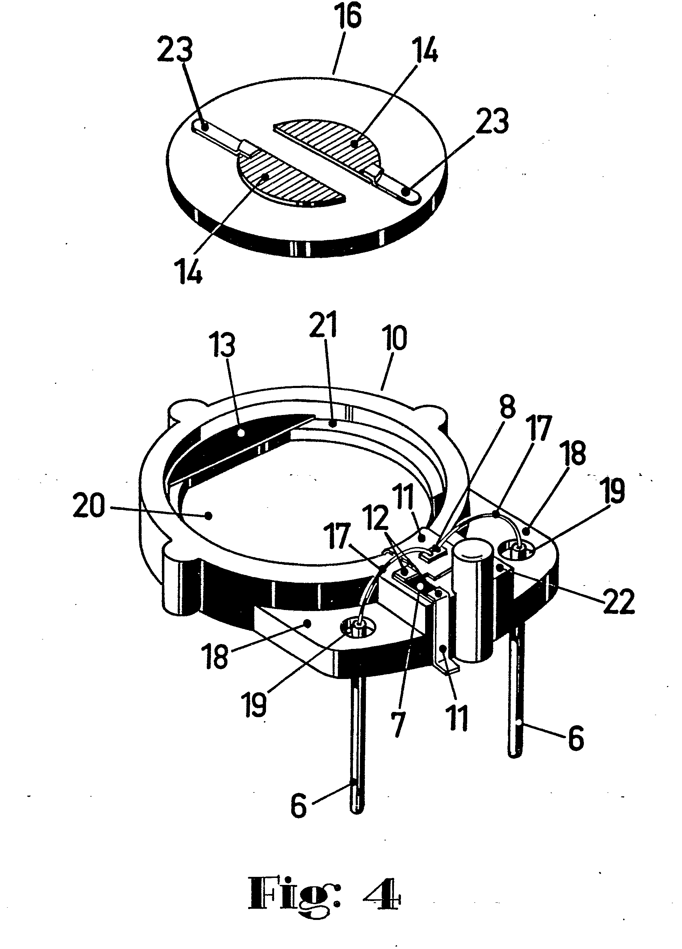

Entscheidend für ein Infrarotdetektorsystem mit maximaler Empfindlichkeit ist eine möglichst geringe Wärmekapazität des aktiven Sensorelementes selbst und eine möglichst geringe Beeinträchtigung durch den Einbau in ein Gehäuse. Die Absorptionsschicht 9 bzw. 14 sollte daher freischwebend im Raum fixiert sein. Figur 1 zeigt in perspektivischer Darstellung den Gesamtaufbau, während in Figur 3 und 4 im vergrößerten Maßstab Einzelheiten zu erkennen sind.

Mit 10 ist ein Trägerelement bezeichnet, das aus einem hochtemperaturbeständigen Thermoplastkunststoff besteht. Ein derartiger Kunststoff kann Polyphenylenoxid, Polyphenylensulfid, Polyimid oder Polyäthersulfon sein. Ein hochtemperaturbeständiger Thermoplastkunststoff ist deshalb erforderlich, da der Ableitwiderstand auf das Trägerelement aufgebracht und bei höherer Temperatur ausgehärtet werden muß.

Damit die Absorptionsschicht 9 bzw. 14 als aktive Sensorfläche frei schwebend fixiert ist, ist das Trägerelement 10 mit einer zentrischen Ausnehmung 20 versehen. Umfangseitig verlaufend ist eine Randvertiefung 21 vorgesehen, in die das Infrarotsensorelement eingesetzt werden kann. Seitlich sind an dem ringförmigen Trägerelement zwei Absätze 18 angeformt, die in ihrer Stärke geringer sind als der übrige Teil des Trägerelementes. In diesen Absätzen ist je ein Durchbruch ausgespart, durch den ein Anschlußstift 6 ragt. Auf diese Weise wird auch eine Zentrierung des Trägerelementes erreicht. Getrennt sind die Absätze durch einen Fortsatz 22, der die Schaltelemente, wie den Ableitwiderstand 7 und den Feldeffekttransistor 8, trägt.

Bevor die Einzelteile zu einem Infrarotdetektor zusammengefügt werden können, müssen sie gereinigt werden. Der Gehäusesockel 4, der Gehäusedeckel 3 und die mit dem Laser ausgeschnittenen Silizium-Fenster 5 werden mit Ultraschall gereinigt. Das Trägerelement 10 und der Feldeffekttransistor 8 werden entsprechend entfettet. Dieser Reinigungsschritt ist notwendig, damit sich später optimale Bond- und Schweißverbindungen erzielen lassen. Darüberhinaus ist eine Entfettung und Reinigung der Bauteile für eine gute Klebeverbindung unerläßlich.

Der Zusammenbau erfolgt erart, daß zunächst am Gehäusesockel 4 das Trägerelement mit Hilfe eines Zweikomponenten-Epoxidharzklebers befestigt wird. Für den Kleber ist nicht nur die Temperaturbeständigkeit, sondern auch die gute Verarbeitungsfähigkeit, wie z.B. niedrige Viskosität, geringes Wasseraufnahmevermögen, lange Tropfzeit und eine maximale Aushärtetemperatur von 150°C wichtig.

Nach dem Aufkleben des Trägerelementes 10 wird der hochohmige Ableitwiderstand 7 durch Spritzen, Siebdrucken, Ausstreichen, Aufdosieren oder vorzugsweise durch Aufstempeln aufgebracht. Die Widerstandsmasse besteht aus einem Bindemittel, dem Metalloxide, wie z.B. Zinnoxid, Zinkoxid, Indiumoxid, Cadmiumoxid oder Kupferoxid, Schwebe- und Dispergiermittel, ein
Entschäumer und ein Antigeliermittel beigefügt sind. Als Bindemittel verwendet man Epoxyharz und/oder ein Acrylharz und/oder ein Polyurethanharz
und/oder Melaminformaldehydharz oder Mischungen hiervon. Der Anteil für
das Bindemittel beträgt 25 bis 44 Gew.-%, für das Metalloxid 55 bis 75
Gew.-%, für das Schwebe- und Dispergiermittel 0,1 bis 0,5 Gew.-%, für den
Entschäumer 0,1 bis 1,0 Gew.-% und für das Antigeliermittel 0,5 bis 1,5
Gew.-%. Nach dem Aufbringen der Widerstandsmasse wird diese bei einer
Temperatur von 150°C bis 230°C ausgehärtet. Wegen dieser Aushärtetemperatur muß man auch einen hochtemperaturbeständigen Kunststoff für das
Trägerelement verwenden.

Bei dem Ableitwiderstand handelt es sich um einen Hochohmwiderstand in
der Größenordnung $10^{10}$ bis $10^{12}$ Ohm. Zur besseren Impedanzwandlung und
damit zur besseren Anpassung an nachfolgende Verstärkerschaltungen ist
üblicherweise ein Feldeffekttransistor 8 im Gehäuse untergebracht. Da
der Kristallschichtwiderstand des Natriumnitrits bei etwa $10^{14}$ Ohm liegt,
muß ein zusätzlicher Ableitwiderstand mit vorgesehen werden, damit der
Feldeffekttransistor nicht durch statische Aufladung blockiert wird. Unter
Berücksichtigung möglichst geringer Empfindlichkeitsverluste bei ausreichender Schnelligkeit wird ein Ableitwiderstand in der Größenordnung
von $10^{10}$ bis $10^{12}$ Ohm benötigt.

Nach dem Aushärten der Widerstandsmasse wird ein Leitkleber aufgebracht,
und zwar ebenfalls durch Aufstempeln. Das Aufbringen kann selbstverständlich auch durch Spritzen, Siebdrucken, Ausstreichen oder Aufdosieren erfolgen. Der Leitkleber wird an den Stellen aufgebracht, wo sich die Leiterbahnen 11, die Anschlußstücke 12 für den Ableitwiderstand und die Klebestellen 13 für den Feldeffekttransistor 8 und das Infrarotsensorelement
befinden. Als Leitkleber verwendet man einen Ein- oder Zweikomponenten-
Epoxidharzkleber, dem Silberteilchen beigemengt sind.

Wenn der Leitkleber aufgebracht ist, so wird sodann das Infrarotsensorelement 2 bzw. 16 in das Trägerelement 10 eingesetzt. Außerdem wird der
Feldeffekttransistor plaziert. Nach dem Aufsetzen bzw. Einsetzen der
Bauelemente wird der Leitkleber bei 60°C bis 180°C ausgehärtet.

0158093

Anschließend werden die Verbindungsdrähte 17 angebracht. Man verwendet hierzu 25 μm starke Al-Drähte, die mit einem Ultraschall-Drahtbonder befestigt werden.

Abschließend wird der Gehäusesockel 4 mit dem Gehäusedeckel 3 hermetisch dicht verschlossen. Da, wie bereits erwähnt, das Sensorelement besonders auch bezüglich der Definition des Ableitwiderstandes empfindlich auf Feuchtigkeit reagiert, erfolgt die Verkappung in trockener $N_2$-Atmosphäre. Um eine optimale Funktionsfähigkeit zu erreichen, muß die beim Verkappen mit eingeschlossene Feuchtigkeit soweit reduziert werden, daß sie weder die Kristallschichtqualität beeinträchtigt noch die Oberflächenleitfähigkeit erhöht. Außerdem darf es keine Wechselwirkung zwischen der Atmosphäre im Gehäuse und dem Sensorelement geben. Aus diesem Grund erfolgt die Verkappung in einer inerten und sehr trockenen $N_2$-Atmosphäre. Zusätzlich wird eine Ausheizung durchgeführt.

Während die Figur 3 einen Einfach-Infrarotdetektor zeigt, ist in Figur 4 ein sogenannter Doppel-Infrarotdetektor dargestellt. Je nach Anwendung besteht ein Doppelsensor aus zwei in Reihe oder zwei parallel geschalteten Einzelsensoren, die auf derselben Unterlage aber mit entgegengesetzter Polarisation aufgebracht sind. Dadurch wird eine automatische Temperaturkompensation erreicht und der Doppelsensor reagiert wie ein Differenzverstärker. Es ergibt sich so gegenüber dem Einfachsensor ein wesentlich besseres Signal-Rauschverhältnis.

Das Trägerelement ist für beide Ausführungsbeispiele gleich. Das Infrarotsensorelement ist mit 16 bezeichnet. Die entsprechenden Absorptionsschichten sind mit 14 und die zugehörigen Kontaktierungsflächen mit 23 gekennzeichnet.

Bezugszeichenliste (5/84 Pt.)

1 Gehäuse

2 Infrarotsensorelement

3 Gehäusedeckel

4 Gehäusesockel

5 Fenster in Gehäusekappe

6 Anschlußstift

7 Ableitwiderstand

8 Feldeffekttransistor

9 Absorptionsschicht

10 Trägerelement

11 Leiterbahnen

12 Anschlußstück

13 Klebestelle

14 Absorptionsschicht

15 Kontaktierungsfläche

16 Infrarotsensorelement

17 Verbindungsdraht

18 Absatz

19 Durchbruch

20 Ausnehmung

21 Randvertiefung

22 Fortsatz

23 Kontaktierungsfläche

P r e h
Elektrofeinmechanische Werke
Jakob Preh, Nachf. GmbH & Co.
Schweinfurter Straße 5
8740 Bad Neustadt/Saale

0158093

, den 12.04.1984

Bsch/Hi
5/84 Pt.

## Verfahren zur Herstellung eines Infrarotdetektors

1. Verfahren zur Herstellung eines Infrarotdetektors, bestehend aus einem Gehäuse (1),in dem ein ein Infrarotsensorelement (2,16) tragendes Trägerelement (10), ein Impedanzwandler in der Form eines Feldeffekttransistors (8) und ein hochohmiger Ableitwiderstand (7) angeordnet sind, dadurch gekennzeichnet,

- daß zunächst am Gehäusesockel (4) ein aus einem elektrisch und thermisch isolierenden Werkstoff bestehendes Trägerelement (10) befestigt wird,

- daß auf das Trägerelement (10) der Ableitwiderstand (7) aufgebracht und ausgehärtet wird,

- daß auf das Trägerelement (10) ein sowohl als Leiter als auch als Kleber dienender Leitkleber an den Stellen aufgebracht wird, wo sich die Leiterbahnen (11), die Anschlußstücke (12) für den Ableitwiderstand (7) und die Klebestellen (13) für den Feldeffekttransistor (8) und das Infrarotsensorelement (2, 16) befinden,

- daß dann das vorpolarisierte und mindestens eine Absorptionsschicht (9, 14) aufweisende Infrarotsensorelement (2, 16) und der Feldeffekttransistor (8) aufgesetzt werden,

- daß der Leitkleber ausgehärtet wird,

- daß die Verbindungsdrähte (17) angebondet werden und

- daß abschließend unter besonderen Umgebungsbedingungen der Gehäusesockel (4) mit einem ein Fenster (5) aufweisenden Deckel (3) hermetisch dicht abgeschlossen wird.

2. Verfahren zur Herstellung eines Infrarotdetektors nach Anspruch 1, dadurch gekennzeichnet, daß als Werkstoff für das Trägerelement (10) ein hochtemperaturbeständiger Thermoplastkunststoff, wie z.B. Polyphenylenoxid, Polyphenylensulfid, Polyimid oder Polyäthersulfon, verwendet wird.

3. Verfahren zur Herstellung eines Infrarotdetektors nach Anspruch 1,
dadurch gekennzeichnet,
daß die Befestigung des Trägerelementes (10) am Gehäusesockel (4) mit
Hilfe eines Zweikomponenten-Epoxidharzklebers erfolgt.

4. Verfahren zur Herstellung eines Infrarotdetektors nach Anspruch 1,
dadurch gekennzeichnet,
daß das Aufbringen des Ableitwiderstandes (7) durch Spritzen, Siebdrucken, Ausstreichen, Aufdosieren oder Aufstempeln erfolgt.

5. Verfahren zur Herstellung eines Infrarotdetektors nach Anspruch 1,
dadurch gekennzeichnet,
daß der Ableitwiderstand (7) aus einem Bindemittel mit 25 bis 44 Gew.-%
besteht, dem ein Metalloxid mit 55 bis 75 Gew.-%, ein Schwebe- und
Dispergiermittel mit 0,1 bis 0,5 Gew.-%, ein Entschäumer mit 0,1 bis
1,0 Gew.-% und ein Antigeliermittel mit 0,5 bis 1,5 Gew.-% beigemengt
sind.

6. Verfahren zur Herstellung eines Infrarotdetektors nach Anspruch 5,
dadurch gekennzeichnet,
daß das Bindemittel ein Epoxyharz und/oder ein Acrylharz und/oder ein
Polyurethanharz und/oder ein Melaminformaldehydharz ist.

7. Verfahren zur Herstellung eines Infrarotdetektors nach Anspruch 6,
dadurch gekennzeichnet,
daß als Metalloxid Zinkoxid, Indiumoxid, Zinnoxid, Cadmiumoxid,
Kupferoxid und/oder deren Abmischungen verwendet werden.

8. Verfahren zur Herstellung eines Infrarotdetektors nach Anspruch 1,
dadurch gekennzeichnet,
daß die Aushärtung des Ableitwiderstandes (7) bei einer Temperatur
von 150° bis 230°C erfolgt.

9. Verfahren zur Herstellung eines Infrarotdetektors nach Anspruch 1,
dadurch gekennzeichnet,
daß der Leitkleber ein Ein- oder Zweikomponenten-Epoxidharzkleber
ist, dem Silberteilchen beigemengt sind.

- 3 -

0158093

10. Verfahren zur Herstellung eines Infrarotdetektors nach Anspruch 1, dadurch gekennzeichnet, daß der Leitkleber durch Aufstempeln, Spritzen, Siebdrucken, Ausstreichen, Aufdosieren auf das Trägerelement aufgebracht wird.

11. Verfahren zur Herstellung eines Infrarotdetektors nach Anspruch 1, dadurch gekennzeichnet, daß der Leitkleber bei einer Temperatur von 60° bis 180°C ausgehärtet wird.

12. Nach dem Verfahren gemäß Anspruch 1 hergestellter Infrarotdetektor, dadurch gekennzeichnet, daß das Trägerelement (10) beidseitig einen angeformten Absatz (18) aufweist, dessen Höhe geringer ist als die des Trägerelementes (10), wobei in jedem Absatz (18) ein Durchbruch (19) ausgespart ist, durch den ein Anschlußstift (6) für die Verbindungsdrähte (17) ragt.

13. Infrarotdetektor nach Anspruch 12, dadurch gekennzeichnet, daß im Trägerelement (10) eine bis zum Gehäusesockel reichende Ausnehmung (20) vorgesehen ist, deren umfangseitig verlaufende Randvertiefung (21) das Infrarotsensorelement (2, 16) derart trägt, daß die von der Absorptionsschicht (9, 14) bedeckte Fläche des Infrarotsensorelementes (2, 16) innerhalb der von der Ausnehmung (20) bedeckten Erstreckung liegt.

Fig: 1

Fig: 2

Preh 5/84

D158093

Fig 3

0158093

**Fig. 4**